# DEMANDE DE BREVET EUROPEEN

(11) **EP 1 825 951 A1**
(43) Date de publication de la demande: **29.08.2007**
(21) Numéro de dépôt: 07356022.9
(22) Date de dépôt: 20.02.2007
(51) Int. Cl.: B23Q 3/12

(54) **Mandrin porte-outil pour l'équipement d'une machine tournante**

(30) Priorité: 23.02.2006 FR 0601598
(71) Demandeur: Etablissements Amyot, 25300 Pontarlier (FR)
(72) Inventeur: Cachod, Yves, 25270 Levier (FR)
(74) Mandataire: Delorme, Nicolas

(57) **Abrégé**

L'invention concerne un mandrin porte-outil (1) pour l'équipement d'une machine tournante, comprenant :
- une partie avant de serrage comportant un premier évidement (3) axial, destiné à recevoir un outil, débouchant vers l'extérieur à une première extrémité d'insertion de l'outil et délimité, à une seconde extrémité, par une première paroi de fond (4), la partie avant de serrage comportant en outre des moyens de serrage de l'outil,
- une partie arrière comportant un second évidement axial (6), destiné à l'engagement d'une broche tournante, débouchant vers l'extérieur à une première extrémité d'engagement de la broche et délimité par une seconde paroi de fond à une seconde extrémité, les première et seconde parois de fond étant traversées par une ouverture reliant les premier (3) et second (6) évidements.

## Description

L'invention concerne un mandrin porte-outil pour l'équipement d'une machine tournante, en particulier d'une perceuse.

Les mandrins porte-outil habituellement utilisés comprennent :
- une partie avant de serrage comportant un premier évidement axial, destiné à recevoir un outil, débouchant vers l'extérieur à une première extrémité d'insertion de l'outil et délimité, à une seconde extrémité, par une première paroi de fond, la partie avant de serrage comportant en outre des moyens de serrage de l'outil,
- une partie arrière comportant un second évidement axial, destiné à l'engagement d'une broche tournante, débouchant vers l'extérieur à une première extrémité d'engagement de la broche et comportant une seconde paroi de fond à une seconde extrémité.

Le second évidement est en outre taraudé sur au moins une partie de sa longueur, la broche tournante comportant une partie filetée complémentaire, destinée à coopérer avec le second évidement pour assurer la fixation du mandrin porte-outil sur la broche.

Un tel montage, bien qu'assurant un maintien correct lorsque la broche tourne dans le sens de vissage du mandrin sur la broche, laisse souvent apparaître un dévissage lorsque l'on souhaite inverser le sens de rotation de la broche.

Ce phénomène est accentué lorsque le mandrin est équipé d'un embout de vissage et que l'on utilise le mandrin pour réaliser le dévissage d'une vis.

Afin d'éviter un tel phénomène, il est connu de ménager une ouverture axiale traversant chacune des première et deuxième parois de fond, reliant ainsi les premier et second évidements axiaux. Une vis, dont la tête prend appui sur la première paroi de fond, traverse l'orifice et vient coopérer, au niveau de sa partie filetée, avec un trou taraudé ménagé axialement dans la broche de la machine qui est engagée dans le second évidement.

Ainsi, la vis s'oppose à la désolidarisation du mandrin et de la broche lorsque cette dernière tourne le sens du dévissage.

Toutefois, dans le cas de machines de forte puissance, les efforts axiaux appliqués sur la vis lors du dévissage peuvent rompre cette dernière de sorte que le maintien du mandrin sur la broche n'est plus assuré. Le mandrin se dévisse alors de la broche et le travail de dévissage n'est plus possible. Il alors nécessaire de surdimensionner la vis de blocage, entraînant une augmentation des dimensions de l'ensemble du mandrin et de la broche.

La présente invention a donc pour but de remédier à ces inconvénients en proposant un mandrin porte-outil capable d'assurer son maintien sur la broche, quel que soit le sens de rotation de celle-ci, même pour des machines de forte puissance.

A cet effet l'invention concerne un mandrin porte-outil pour l'équipement d'une machine tournante, comprenant :
- une partie avant de serrage comportant un premier évidement axial, destiné à recevoir un outil, débouchant vers l'extérieur à une première extrémité d'insertion de l'outil et délimité, à une seconde extrémité, par une première paroi de fond, la partie avant de serrage comportant en outre des moyens de serrage de l'outil,
- une partie arrière comportant un second évidement axial, destiné à l'engagement d'une broche tournante, débouchant vers l'extérieur à une première extrémité d'engagement de la broche et délimité par une seconde paroi de fond à une seconde extrémité, les première et seconde parois de fond étant traversées par une ouverture reliant les premier et second évidements,
- une vis traversant cette ouverture, la partie filetée de la vis étant engagée dans un taraudage axial de la broche de la machine, tandis que la tête de la vis prend appui contre la paroi de fond du premier évidement,
caractérisé en ce que le second évidement axial comporte depuis la seconde paroi de fond vers sa première extrémité ouverte, une première zone de section circulaire puis une seconde zone de section non circulaire, ces deux zones étant destinées à recevoir des parties complémentaires ménagées sur la broche tournante de la machine.

Ces zones de section circulaire assurent le centrage du mandrin par rapport à la broche tournante.

L'intégralité de la transmission du mouvement de rotation de la broche est réalisée par l'intermédiaire des zones de section non circulaire, quel que soit le sens de rotation de la broche.

De cette manière, aucun effort axial n'est transmis à la vis lors du changement de sens de rotation. La vis ne servant alors qu'au maintien en translation du porte-outil sur la broche, les efforts axiaux restent faibles, quelle que soit la puissance de la machine tournante.

Avantageusement, la zone non circulaire du second évidement est de forme générale polygonale, de préférence hexagonale.

Cette forme particulièrement simple à réaliser offre une répartition équilibrée des contraintes.

Selon une caractéristique de l'invention, le second évidement est taraudé sur au moins une partie de sa longueur.

Ce taraudage est notamment destiné à assurer la tenue du mandrin de manière à faciliter sa fabrication.

Préférentiellement, la première paroi de fond est de forme générale tronconique et convergente en direction du second évidement, la zone de la tête de la vis en appui contre la première paroi de fond étant de forme complémentaire.

La conicité de la tête de la vis et de la paroi de fond lui servant d'appui permet le guidage de la vis lors de l'insertion de celle-ci par le premier évidement et une meilleure répartition des forces de serrage sur le mandrin, évitant en particulier que les forces de serrage ne soient dirigées intégralement selon l'axe du mandrin, vers la zone de faible épaisseur située entre les deux parois de fond.

De toute façon, l'invention sera bien comprise à l'aide de la description qui suit, en référence au dessin schématique annexé représentant, à titre d'exemple non limitatif, une forme d'exécution de ce mandrin.
Figure 1 est une vue éclatée d'un mandrin porte-outil et d'une broche correspondante;
Figure 2 est une vue en coupe longitudinale du mandrin porte-outil en position montée sur la broche;

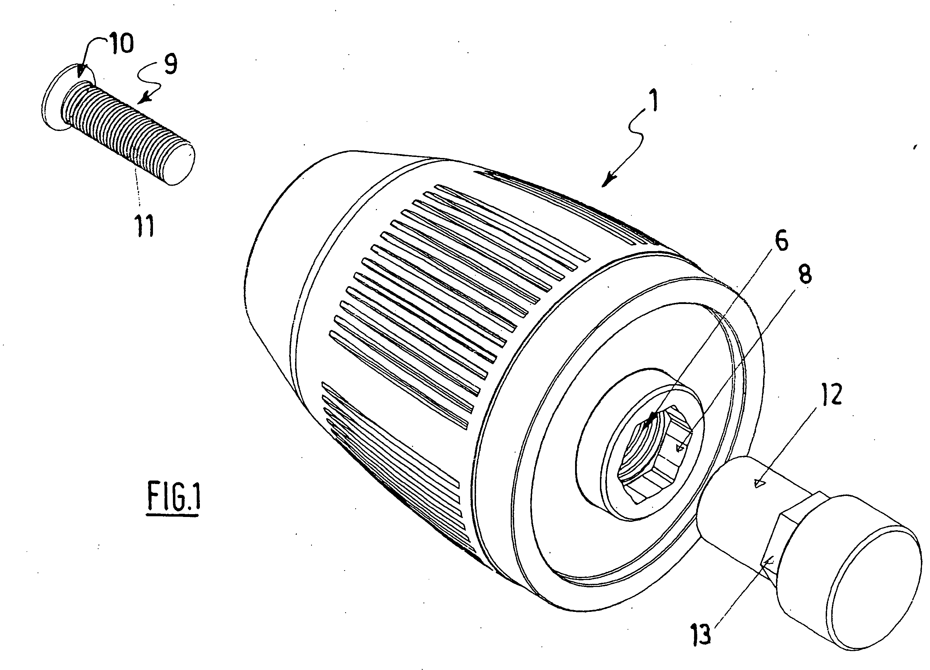

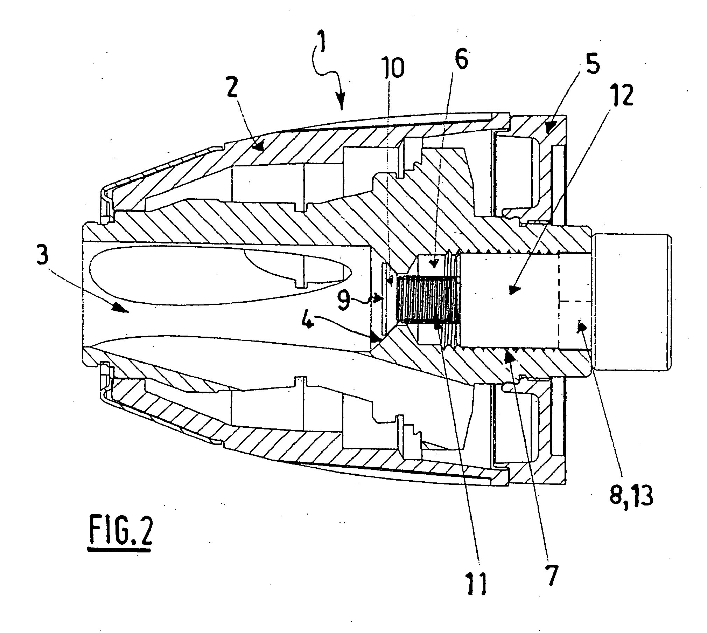

Les figures 1 et 2 représentent un mandrin porte-outil 1 comprenant une partie avant de serrage. Cette partie avant est entourée par une douille 2 et comporte un premier évidement axial 3, destiné à recevoir un outil, tel qu'un forêt ou un embout de vissage. Le premier évidement débouche vers l'extérieur à une première extrémité d'insertion de l'outil et délimité, à une seconde extrémité, par une première paroi de fond 4.

La partie avant de serrage comporte en outre des moyens de serrage de l'outil, tels que des mors, entraînés par la douille 2 par l'intermédiaire d'un écrou, les mors et l'écrou n'étant pas représentés au dessin pour des raisons de lisibilité.

Le mandrin comporte en outre une partie arrière entourée par une jupe 5, la partie arrière comportant un second évidement cylindrique axial 6. Ce dernier débouche vers l'extérieur à une première extrémité d'engagement de la broche et délimité par une seconde paroi de fond à une seconde extrémité.

Le second évidement comporte généralement une partie cylindrique taraudée 7 s'étendant sensiblement depuis la paroi de fond correspondante en direction de l'extrémité ouverte d'engagement de la broche. Cette caractéristique n'est pas en lien avec l'objet de l'invention mais sert uniquement à faciliter les opérations de fabrication du mandrin.

Le second évidement comporte en outre, au niveau de sa première extrémité, une zone de forme générale hexagonale 8.

Une ouverture traversant axialement les première et seconde parois de fond, permet le passage d'une vis de blocage 9. Une partie tronconique de la tête de la vis 10 vient en appui contre la première paroi de fond 4, celle-ci étant de forme complémentaire tronconique et convergente en direction du second évidement 6.

La partie filetée 11 de la vis 9 de blocage débouche alors dans le second évidement axial 6.

L'extrémité cylindrique 12 d'une broche tournante d'une machine de type perceuse par exemple est engagée dans le second évidement 6 de manière à coopérer avec la zone cylindrique 7 de celui-ci.

De même, une partie mâle hexagonale 13 ménagée sur la broche tournante coopère par complémentarité de forme avec la zone hexagonale 8 du second évidement 6, cette zone 8 formant la partie femelle de l'accouplement.

Lors de l'engagement de la broche, la partie cylindrique 12 de cette dernière est guidée par les parties saillantes du taraudage du second évidement 6.

En outre, la partie filetée 11 de la vis de blocage 9 coopère avec un trou taraudé, ménagé axialement dans l'extrémité cylindrique de la broche.

De cette manière, la vis de blocage 9 permet de maintenir la broche en position engagée, en empêchant la translation de cette dernière dans le second évidement 6.

Ainsi, quel que soit le sens de rotation de la broche, la transmission de mouvement au mandrin porte-outil 1 est réalisée intégralement par l'accouplement de la partie mâle hexagonale 13 de la broche et de la zone complémentaire 8 du second évidement.

La vis assure alors simplement le blocage en translation entre le mandrin et la broche tournante, sans jouer aucun rôle dans la transmission du mouvement.

De cette manière, la vis n'est pas soumise à des efforts axiaux risquant de la rompre lorsque la puissance de la broche est trop importante.

Ainsi, le mandrin porte-outil ci-dessus permet de garantir une bonne transmission du mouvement de la broche tournante, quel que soit le sens de rotation et la puissance de la machine tournante.

Comme il va de soi, l'invention ne se limite pas à la seule forme d'exécution de ce système, décrite ci-dessus à titre d'exemple, mais elle en embrasse au contraire toutes les variantes. C'est ainsi notamment que la forme de la zone non circulaire du second évidement et de la partie complémentaire ménagée sur la broche pourrait être différente ou que le second évidement pourrait ne pas comporter de taraudage.

## Revendications

1. Mandrin porte-outil (1) pour l'équipement d'une machine tournante, comprenant :
- une partie avant de serrage comportant un premier évidement (3) axial, destiné à recevoir un outil, débouchant vers l'extérieur à une première extrémité d'insertion de l'outil et délimité, à une seconde extrémité, par une première paroi de fond (4), la partie avant de serrage comportant en outre des moyens de serrage de l'outil,
- une partie arrière comportant un second évidement axial (6), destiné à l'engagement d'une broche tournante, débouchant vers l'extérieur à une première extrémité d'engagement de la broche et délimité par une seconde paroi de fond à une seconde extrémité, les première et seconde parois de fond étant traversées par une ouverture reliant les premier (3) et second (6) évidements,
- une vis (9) à filetage à gauche traversant cette ouverture, la partie filetée (11) de la vis étant destinée à être engagée dans un taraudage axial de la broche de la machine, tandis que la tête (10) de la vis (9) prend appui contre la paroi de fond (4) du premier évidement,
**caractérisé en ce que** le second évidement axial (6) comporte depuis la seconde paroi de fond vers sa première extrémité ouverte, une première zone de section circulaire (7) puis une seconde zone de section non circulaire (8), ces deux zones étant destinées à recevoir des parties complémentaires (12, 13) ménagées sur la broche tournante de la machine.

2. Mandrin porte-outil selon la revendication 1, **caractérisé en ce que** la zone non circulaire (8) du second évidement (6) est de forme générale polygonale, de préférence hexagonale.

3. Mandrin porte-outil selon l'une des revendications 1 et 2, **caractérisé en ce que** le second évidement (6) est taraudé sur au moins une partie de sa longueur.

4. Mandrin porte-outil selon l'une des revendications 1 à 3, **caractérisé en ce que** la première paroi de fond (4) est de forme générale tronconique et convergente en direction du second évidement, la zone de la tête (10) de la vis (9) en appui contre la première paroi de fond (4) étant de forme complémentaire.
